# EUROPÄISCHE PATENTSCHRIFT

(11) **EP 2 570 310 B1**
(45) Veröffentlichungstag und Bekanntmachung des Hinweises auf die Patenterteilung: **29.04.2015**
(21) Anmeldenummer: 11181864.7
(22) Anmeldetag: 19.09.2011
(51) Int. Cl.: B60S 3/06

(54) **Verfahren zum Waschen eines Fahrzeugs und Fahrzeugwaschanlage zur Durchführung des Verfahrens**
Method for washing a vehicle and vehicle washing assembly for executing the method
Procédé de lavage d'un véhicule et installation de lavage de véhicule destinée à l'exécution du procédé

(43) Veröffentlichungstag der Anmeldung: 20.03.2013
(73) Patentinhaber: Alfred Kärcher GmbH & Co. KG, 71364 Winnenden (DE)
(72) Erfinder: Speckmaier, André, 71543 Wüstenrot (DE); Heid, Claus, 70186 Stuttgart (DE); Fischer, Rainer, 75417 Mühlacker (DE); Mettang, Bruno, 71397 Leutenbach (DE)
(74) Vertreter: Hoeger, Stellrecht & Partner Patentanwälte

(56) Entgegenhaltungen:
- EP-A2- 0 396 054
- WO-A2-02/099579
- GB-A- 2 029 344
- JP-A- 2004 203 254
- US-A- 5 447 574
- US-A1- 2004 238 016

## Beschreibung

Die Erfindung betrifft ein Verfahren zum selbsttätigen Waschen eines Fahrzeugs in einer Fahrzeugwaschanlage mit den Merkmalen des Oberbegriffes von Patentanspruch 1.

Außerdem betrifft die Erfindung eine Fahrzeugwaschanlage zum Waschen eines Fahrzeugs, insbesondere zur Durchführung des voranstehend genannten Verfahrens, mit den Merkmalen des Oberbegriffes von Patentanspruch 13.

Verfahren zum selbsttätigen Waschen von Fahrzeugen in Fahrzeugwaschanlagen sind bekannt. So kennt der Fachmann beispielsweise Waschverfahren, bei denen das Fahrzeug an verschiedenen Waschstationen entlang geführt wird. An den Waschstationen befindet sich jeweils mindestens ein Waschwerkzeug, dessen Betrieb von einer Steuereinrichtung gesteuert wird. Es können unterschiedliche Waschprogramme zum Einsatz kommen zur Durchführung unterschiedlicher Waschvorgänge.

Es sind auch Verfahren bekannt, bei denen das Fahrzeug während des Waschvorgangs ortsfest angeordnet ist und die Fahrzeugwaschanlage ein Portal aufweist, an dem Waschwerkzeuge verstellbar gehalten sind und das während des Waschvorgangs am Fahrzeug entlang bewegt wird. In vielen Fällen wird das Portal zum Waschen des Fahrzeugs mehrmals entlang des Fahrzeugs hin und her bewegt.

Die Waschwerkzeuge können häufig der Kontur des Fahrzeuges selbsttätig folgen. Hierzu sind den Waschwerkzeugen Sensoren zugeordnet, die sicherstellen, dass die Waschwerkzeuge einen möglichst optimalen Abstand zum Fahrzeug einnehmen, um dieses zuverlässig zu waschen.

Als Waschwerkzeuge kommen in der Regel Reinigungsbürsten und/oder Düsenbalken zum Einsatz, die vertikal oder horizontal ausgerichtet sind und relativ zum Fahrzeug an diesem entlang bewegt werden können. Die Reinigungsbürsten können beispielsweise in Form einer Dachbürste ausgestaltet sein, die um eine horizontal ausgerichtete Drehachse drehbar und höhenverstellbar gelagert ist. Sie können auch in Form von Seitenbürsten zum Einsatz kommen, die um eine vertikal ausgerichtete Drehachse drehbar sind und quer zur Fahrzeuglängsrichtung verstellt werden können. Alternativ oder ergänzend können Düsenbalken zum Einsatz kommen, deren Längsachse horizontal oder vertikal ausgerichtet ist und die eine Vielzahl von Reinigungsdüsen aufweisen. Mittels der Reinigungsdüsen kann das zu waschende Fahrzeug mit unter Druck stehender Reinigungsflüssigkeit beaufschlagt werden.

Das selbsttätige Waschen von Fahrzeugen in Fahrzeugwaschanlagen hat sich bei Personenkraftwagen bewährt. Schwierigkeiten ergeben sich beim selbsttätigen Waschen von Nutzfahrzeugen, insbesondere von Lastkraftwagen mit und ohne Anhänger oder auch beim Waschen von Sattelzügen, da bei derartigen Fahrzeugen die Waschwerkzeuge nicht ohne Weiteres entlang des gesamten Fahrzeuges dessen Kontur folgen können, ohne dass die Gefahr besteht, dass die Waschwerkzeuge oder Fahrzeugteile beschädigt werden. So muss beispielsweise dafür Sorge getragen werden, dass beim selbsttätigen Waschen eines Lastkraftwagens mit Anhänger die Waschwerkzeuge nicht vollständig in den Bereich zwischen dem Lastkraftwagen und dem Anhänger eintauchen, da sie ansonsten von der Deichsel, die den Anhänger mit dem Lastkraftwagen verbindet, beschädigt werden können. Außerdem besteht dann die Gefahr einer Beschädigung der zwischen dem Lastkraftwagen und dem Anhänger verlaufenden Verbindungsleitungen. Schwierigkeiten ergeben sich auch beim selbsttätigen Waschen von Sattelzugmaschinen mit Sattelauflieger. Zwischen der Sattelzugmaschine und dem Sattelauflieger befindet sich ein Bereich, in den beispielsweise eine Dachbürste nicht ohne Weiteres eintauchen darf, da auch hier die Gefahr einer Beschädigung von Verbindungsleitungen besteht.

Das selbsttätige Waschen von Nutzfahrzeugen erfolgt daher üblicherweise dergestalt, dass vor Beginn des eigentlichen Waschvorgangs vom Benutzer manuell ein bestimmtes Waschprogramm an der Steuereinrichtung ausgewählt wird, das an das jeweilige Fahrzeug angepasst ist. Hierbei besteht die Gefahr, dass unbeabsichtigt ein falsches Waschprogramm ausgewählt wird, das zum Waschen des jeweiligen Fahrzeuges ungeeignet ist und das Risiko birgt, dass das Fahrzeug und/oder Waschwerkzeuge beschädigt werden.

Aus der Veröffentlichung EP 0 396 054 A2 ist eine Fahrzeugwaschanlage bekannt, bei der fahrzeugspezifische Daten des zu waschenden Fahrzeuges berührungslos aus einem vom Fahrzeug mitgeführten Speicherelement (Chip) mittels einer Induktionsschleife ausgelesen werden. Die fahrzeugspezifischen Daten enthalten die Abmessungen des Fahrzeugs betreffende Daten sowie Daten über die Art des Fahrzeuges, die Länge, die Breite und diejenigen Stellen des Fahrzeugs, die erfindungsgemäß stark verschmutzt sind. Zusätzlich enthalten die Daten auch Angaben über den Zeitpunkt der letzten Wäsche des Fahrzeuges. Aufgrund dieser Daten kann das anschließende Waschverfahren an das jeweils zu waschende Fahrzeug individuell angepasst werden.

Aus der Veröffentlichung GB 2 029 344 A ist eine Fahrzeugwaschanlage bekannt, bei der aus dem Verlauf der Fahrzeugfront eine Unterscheidung durchgeführt wird zwischen Personenkraftwagen, Kleintransportern und Lastwagen. Der Verlauf der Fahrzeugfront wird mittels einer Dachbürste der Fahrzeugwaschanlage ermittelt, die in Abhängigkeit von der Kontur des Fahrzeuges relativ zum Fahrzeug bewegbar ist. Nachdem eine Unterscheidung getroffen wurde, ob es sich um einen Personenkraftwagen, einen Kleintransporter oder einen Lastwagen handelt, wird für das weitere Waschverfahren der Anpressdruck der Dachbürste unterschiedlich eingestellt.

Aus der Veröffentlichung US 5,447,574 A sind ein Verfahren zum selbsttätigen Waschen eines Fahrzeuges sowie eine Fahrzeugwaschanlage bekannt, bei der an einem längs des Fahrzeugs verfahrbaren Portal eine Vielzahl von Lichtschranken angeordnet sind, mit deren Hilfe die seitliche Kontur des Fahrzeuges erfasst werden kann. Die Ausrichtung von oberhalb des Fahrzeugs angeordneter Dachdüsen sowie das Ausmaß einer Hubbewegung von seitlich neben dem Fahrzeug angeordneten Seitendüsen werden dann im anschließenden Waschvorgang an die erfasste Kontur des jeweiligen Fahrzeuges angepasst.

Aus der Veröffentlichung WO 02/099579 A2 sind ein Verfahren zum selbsttätigen Waschen eines Fahrzeuges und eine Fahrzeugwaschanlage bekannt, bei der zu Beginn des Waschvorganges der Fahrzeugtyp manuell einer Steuereinrichtung eingegeben werden kann.

Aufgabe der vorliegenden Erfindung ist es, ein Verfahren der eingangs genannten Art sowie eine Fahrzeugwaschanlage zur Durchführung des Verfahrens bereitzustellen, bei dem unterschiedliche Fahrzeuge gewaschen werden können, ohne dass die Gefahr besteht, dass die Fahrzeuge und/oder Waschwerkzeuge beschädigt werden.

Diese Aufgabe wird durch ein Verfahren mit den Merkmalen von Patentanspruch 1 gelöst.

Beim erfindungsgemäßen Verfahren werden mittels einer Sensoreinrichtung Fahrzeugeigenarten erfasst und aus diesen Fahrzeugeigenarten wird eine Fahrzeugklasse bestimmt, der das zu waschende Fahrzeug zugeordnet wird. Der Betrieb des mindestens einen Waschwerkzeuges erfolgt dann entsprechend der zugeordneten Fahrzeugklasse. Die manuelle Eingabe eines bestimmten Waschprogramms, das an das zu waschende Fahrzeug angepasst ist, vor Beginn des eigentlichen Waschvorganges kann somit entfallen. Das zu waschende Fahrzeug wird anhand der von der Sensoreinrichtung erfassten Fahrzeugeigenarten klassifiziert und der Betrieb des mindestens einen Waschwerkzeuges erfolgt dann in Abhängigkeit von der Fahrzeugklasse, in die das Fahrzeug eingeordnet wird.

Die Klassifizierung des Fahrzeuges ermöglicht beispielsweise eine Unterscheidung dahingehend, ob es sich um einen Personenkraftwagen oder um ein Nutzfahrzeug, insbesondere um einen Lastkraftwagen handelt. Letztere können bevorzugt weiter unterschieden werden dahingehend, ob es sich um einen Lastkraftwagen mit Ladefläche oder etwa um eine Sattelzugmaschine handelt. Es kann günstigerweise auch eine Unterscheidung getroffen werden dahingehend, ob an den Lastkraftwagen mit Ladefläche ein Anhänger angehängt ist. Es kann insbesondere auch eine Unterscheidung dahingehend getroffen werden, ob ein kompletter Sattelzug gewaschen werden soll, also ein Gespann aus Sattelzugmaschine und Sattelauflieger, oder ob beispielsweise nur die Sattelzugmaschine ohne Sattelauflieger gewaschen werden soll. Auch weitere Unterscheidungen können günstigerweise getroffen werden. Es kann beispielsweise vorgesehen sein, dass anhand der von der Sensoreinrichtung erfassten Fahrzeugeigenarten zwischen klassischen Personenkraftwagen und Kleintransportern mit und ohne Anhänger unterschieden werden kann.

Die von der Sensoreinrichtung erfassbaren Fahrzeugeigenarten umfassen insbesondere die Fahrzeuggeometrie, also die Höhe und vorzugsweise auch die Breite des Fahrzeuges. Darüber hinaus können günstigerweise auch charakteristische Konturverläufe erfasst werden, insbesondere bestimmte Eigenarten der Fahrzeugkontur im Bereich der Front des Fahrzeuges.

Erfindungsgemäß wird zumindest eine Fahrzeugeigenart mittels der Sensoreinrichtung berührungslos erfasst. Eine mechanische Kontaktierung des Fahrzeuges zur Bestimmung der Fahrzeugeigenart kann dadurch entfallen. Dies vermindert das Risiko, dass das Fahrzeug bei der Erfassung der Fahrzeugeigenart beschädigt wird.

Die Erfassung von Fahrzeugeigenarten kann beispielsweise mittels Ultraschallsensoren erfolgen oder auch mittels Sensoren, die empfindlich sind auf elektromagnetische Strahlung, insbesondere auf Lichtstrahlung und/oder Infrarotstrahlung.

Beim erfindungsgemäßen Verfahren werden mittels der Sensoreinrichtung Lücken der Fahrzeugkontur in Abhängigkeit vom Abstand zum vorderen Ende des Fahrzeuges erfasst. Derartige Lücken der Fahrzeugkontur weisen beispielsweise Lastkraftwagen mit Ladefläche und Anhänger sowie Sattelzüge auf. Allerdings ist die Lücke bei Sattelzügen, also die Lücke zwischen der Sattelzugmaschine und dem Sattelauflieger, in einem kürzeren Abstand zum vorderen Ende des Fahrzeuges angeordnet als bei Lastkraftwagen mit Ladefläche und Anhänger. Durch Erfassen der Lücke der Fahrzeugkontur in Abhängigkeit von deren Abstand zum vorderen Ende des Fahrzeuges kann somit eine Klassifizierung vorgenommen werden, wobei zwischen Lastkraftwagen mit Ladefläche und Anhänger einerseits und Sattelzugmaschinen mit Sattelauflieger andererseits unterschieden werden kann. Im erstgenannten Fall kann dann vorgesehen sein, dass ein höhenverstellbar gelagertes Waschwerkzeug in die Lücke eintaucht und bis zu einer vorgegebenen oder vorgebbaren Mindesthöhe abgesenkt wird, wohingegen im zweitgenannten Fall ein höhenverstellbar gelagertes Waschwerkzeug nicht in die Lücke eintaucht. Im erstgenannten Fall kann auch ein quer zur Fahrzeuglängsachse horizontal verstellbares Waschwerkzeug in gewissem Ausmaß, nämlich bis zum Erreichen einer maximalen horizontalen Eintauchtiefe, in die erfasste Lücke eintauchen, wohingegen im zweiten Falle das quer zur Fahrzeuglängsrichtung horizontal verstellbare Waschwerkzeug in die erfasste Lücke nicht eintaucht.

Es kann beispielsweise vorgesehen sein, dass bei Vorliegen einer Lücke der Fahrzeugkontur in einem Abstandsbereich von maximal 6 Meter zum vorderen Ende des Fahrzeuges auf das Vorliegen eines Sattelzuges geschlossen wird, wohingegen bei Vorliegen einer Lücke in einem Abstandsbereich größer 6 Meter auf das Vorliegen eines Lastkraftwagens mit Ladefläche und Anhänger geschlossen wird. Günstigerweise ist der jeweils maßgebliche Abstandsbereich herstellerseitig oder vom Benutzer der Fahrzeugwaschanlage vorgebbar.

Wie bereits erwähnt, ist es günstig, wenn Personenkraftwagen, Kleintransporter und Lastkraftwagen unterschiedlichen Fahrzeugklassen zugeordnet werden.

Bei Einsatz von Waschwerkzeugen in Form von Waschbürsten ist zur Erzielung eines optimalen Reinigungsergebnisses ein gewisser Anpressdruck erforderlich, der von der Waschbürste gegen die Oberfläche des Fahrzeuges ausgeübt wird. Günstig ist es, wenn der Anpressdruck an die dem Fahrzeug zugeordnete Fahrzeugklasse angepasst wird. Da die Waschbürste an einem Lastkraftwagen mit einer größeren Anlagefläche anliegt als bei einem Kleintransporter und der Kleintransporter eine größere Anlagefläche für die Waschbürste aufweist als ein Personenkraftwagen, ist es zur Erzielung eines optimalen Reinigungsergebnisses von Vorteil, wenn der Anpressdruck der Waschbürste bei einem Lastkraftwagen selbsttätig größer gewählt wird als bei einem Kleintransporter und bei einem Kleintransporter der Anpressdruck der Waschbürste größer gewählt wird als bei einem Personenkraftwagen. Der Anpressdruck sollte auch nicht zu groß gewählt werden, da ansonsten das Fahrzeug beschädigt werden kann. Kann selbsttätig erkannt werden, ob ein Personenkraftwagen, ein Kleintransporter oder ein Lastkraftwagen gewaschen werden soll, so kann selbsttätig der erforderliche Anpressdruck der Waschbürste eingestellt werden, ohne dass hierzu eine manuelle Auswahl getroffen werden muss.

Günstig ist es, wenn Lastkraftwagen ohne Anhänger und Lastkraftwagen mit Anhänger unterschiedlichen Fahrzeugklassen zugeordnet werden, denn dies ermöglicht es, den Betrieb des mindestens einen Waschwerkzeuges an das möglicherweise Vorliegen eines Anhängers anzupassen.

Das Waschwerkzeug kann beispielsweise höhenverstellbar gelagert sein. Vorzugsweise wird ein derartiges Waschwerkzeug im Bereich zwischen Lastkraftwagen und Anhänger nur bis zu einer vorgebbaren oder vorgegebenen Mindesthöhe abgesenkt. Dadurch kann sichergestellt werden, dass das ansonsten selbsttätig der Kontur des Fahrzeuges folgende Waschwerkzeug, beispielsweise eine Dachbürste oder ein quer zur Fahrzeuglängsrichtung horizontal ausgerichteter Düsenbalken, im Bereich zwischen Lastkraftwagen und Anhänger nur bis knapp oberhalb der Deichsel vertikal abgesenkt wird, über die der Anhänger mit dem Lastkraftwagen verbunden ist. Die Höhenlage der Deichsel bezogen auf die Stellfläche des Fahrzeuges bestimmt somit die Mindesthöhe, auf die das höhenverstellbar gelagerte Waschwerkzeug im Bereich zwischen dem Lastkraftwagen und dem Anhänger vertikal abgesenkt wird. Günstigerweise ist die Mindesthöhe im Herstellerwerk der Fahrzeugwaschanlage oder auch vom Betreiber der Fahrzeugwaschanlage vorgebbar.

Ist das Waschwerkzeug quer zur Längsrichtung des Fahrzeuges horizontal verstellbar, wie dies insbesondere bei üblichen Seitenbürsten und Seitendüsenbalken der Fall ist, so ist es von Vorteil, wenn das ansonsten selbsttätig der Kontur des Fahrzeuges folgende Waschwerkzeug in den Bereich zwischen Lastkraftwagen und Anhänger allenfalls bis zu einer vorgegebenen oder vorgebbaren maximalen Eintauchtiefe eintaucht. Dadurch kann sichergestellt werden, dass das quer zur Längsrichtung des Fahrzeuges horizontal verstellbare Waschwerkzeug nicht durch die Deichsel beschädigt wird, die den Anhänger mit dem Lastkraftwagen verbindet. Die Eintauchtiefe wird durch die Breite der Deichsel bestimmt. In vielen Fällen erstreckt sich die Deichsel in horizontaler Richtung bis in einen gewissen Abstand zur längs gerichteten Mittelachse des Fahrzeuges. Um eine Beschädigung des Waschwerkzeuges zu vermeiden, kann dieses dann günstigerweise nur bis knapp an die Maximalbreite der Deichsel in den Bereich zwischen dem Lastkraftwagen und dem Anhänger horizontal eintauchen. Die maximale horizontale Eintauchtiefe ist günstigerweise im Herstellerwerk der Fahrzeugwaschanlage oder auch vom Betreiber der Fahrzeugwaschanlage vorgebbar.

Bei einer bevorzugten Ausgestaltung des erfindungsgemäßen Verfahrens werden Sattelzugmaschinen mit und ohne Sattelauflieger unterschiedlichen Fahrzeugklassen zugeordnet. Je nachdem, ob lediglich eine Sattelzugmaschine gewaschen werden soll oder aber ein kompletter Sattelzug in Form eines Gespanns aus Sattelzugmaschine und Sattelauflieger, kann der Betrieb von mindestens einem Waschwerkzeug unterschiedlich erfolgen.

Es kann beispielsweise vorgesehen sein, dass mindestens ein Waschwerkzeug höhenverstellbar gelagert ist, wobei das Waschwerkzeug in den Bereich zwischen Sattelzugmaschine und Sattelauflieger nicht eintaucht. Im Bereich zwischen Sattelzugmaschine und Sattelauflieger folgt das ansonsten selbsttätig der Kontur des Fahrzeuges folgende Waschwerkzeug somit nicht exakt der Kontur des Fahrzeuges. Eine Beschädigung von Verbindungsleitungen zwischen der Sattelzugmaschine und dem Sattelauflieger wird dadurch ebenso vermieden wie eine Beschädigung des Waschwerkzeuges durch derartige Verbindungsleitungen.

Bei einer besonders einfachen Variante des erfindungsgemäßen Verfahrens weist die Sensoranordnung mindestens zwei Lichtschranken auf, die in unterschiedlicher Höhe relativ zur Stellfläche des Fahrzeuges positioniert sind. Dies gibt die Möglichkeit zu prüfen, ob und gegebenenfalls welche Lichtschranken, die quer zur Fahrzeuglängsachse ausgerichtet sind, in bestimmten Abständen von einem Fahrzeugende unterbrochen werden. Dies erlaubt Rückschlüsse auf die Fahrzeugkontur und damit auf Fahrzeugklasse des zu waschenden Fahrzeuges.

Alternativ oder ergänzend kann die Erfassung von Fahrzeugeigenarten mit Hilfe von Signalgebern erfolgen, die der Steuereinrichtung ein Signal bereitstellen, das von der momentanen Position eines selbsttätig der Kontur des Fahrzeuges folgenden Waschwerkzeuges abhängig ist. Beispielsweise kann der Hubantrieb eines höhenverstellbaren Waschwerkzeuges und/oder der Vorschubantrieb eines horizontal, quer zur Fahrzeuglängsachse verstellbaren Waschwerkzeuges und/oder der Fahrantrieb eines Waschportales, an dem mindestens ein Waschwerkzeug gehalten ist, mit einem Signalgeber, beispielsweise einem Impulszähler, gekoppelt sein, der ein von der Position des Waschwerkzeuges bzw. des Waschportales abhängiges Signal bereitstellt. Diese Signale können von der Steuereinrichtung ausgewertet werden zur Bestimmung der Fahrzeugklasse. Durch die Erfassung der Position eines selbsttätig der Kontur des Fahrzeuges folgenden Waschwerkzeuges kann die Kontur des Fahrzeuges zumindest bereichsweise erfasst werden, beispielsweise die Kontur im Fahrzeugfrontbereich. Dies erlaubt Rückschlüsse auf die Fahrzeugklasse des Fahrzeuges.

Die Sensoreinrichtung erfasst günstigerweise geometrische Fahrzeugeigenarten. Beispielsweise kann vorgesehen sein, dass mittels der Sensoreinrichtung die Höhe und/oder die Breite des Fahrzeuges erfasst werden.

Von besonderem Vorteil ist es, wenn mittels der Sensoreinrichtung geprüft wird, ob das Fahrzeug in mindestens einem vorgegebenen Abstand zum vorderen Ende des Fahrzeuges eine vorgegebene Höhe überschreitet. Die Sensoreinrichtung ermöglicht es hierbei zum einen, das vordere Ende des Fahrzeuges zu erfassen. Zum anderen kann geprüft werden, ob das Fahrzeug in einem und vorzugsweise in mehreren vorgegebenen Abständen zum vorderen Fahrzeugende eine vorgegebene Höhe überschreitet. Dies ermöglicht eine besonders einfache Unterscheidung zwischen Personenkraftwagen und Lastkraftwagen, da bei Lastkraftwagen in der Regel die Fahrzeugfront mehr oder weniger vertikal bis zum Fahrzeugdach verläuft, wohingegen bei Personenkraftwagen meistens eine Motorhaube vorliegt. Auch Kleintransporter können auf diese Weise erkannt werden. Der Verlauf der Fahrzeugfront kann somit als Kriterium herangezogen werden zur Klassifizierung des Fahrzeuges, wobei zwischen Personenkraftwagen, Kleintransportern und Lastkraftwagen unterschieden werden kann.

Von besonderem Vorteil ist es, wenn die erfassten Fahrzeugeigenarten nicht nur zur Anpassung des Betriebes des mindestens einen Waschwerkzeuges herangezogen werden sondern auch zur Bestimmung der Kosten der Fahrzeugwäsche. Dies ermöglicht eine selbsttätige Abrechnung der Waschkosten, ohne dass hierzu eine manuelle Eingabe erforderlich ist. Alternativ oder ergänzend zu den erfassten Fahrzeugeigenarten kann zur Bestimmung der Kosten der Fahrzeugwäsche auch die dem Fahrzeug zugeordnete Fahrzeugklasse herangezogen werden, die aus den erfassten Fahrzeugeigenarten bestimmt wurde. Die Fahrzeugwaschanlage kann beispielsweise ein Betriebsdatenerfassungsglied aufweisen, dem die erfassten Fahrzeugeigenarten und/oder die aus diesen bestimmte Fahrzeugklasse des Fahrzeuges bereitgestellt werden, so dass diese Daten in die Bestimmung der Kosten der Fahrzeugwäsche einflie-βen können.

Wie bereits erwähnt, betrifft die Erfindung auch eine Fahrzeugwaschanlage zum Waschen eines Fahrzeugs, insbesondere zur Durchführung des voranstehend erläuterten Verfahrens. Die erfindungsgemäße Aufgabe wird bei einer Fahrzeugwaschanlage durch die Merkmale von Patentanspruch 13 gelöst. Die Fahrzeugwaschanlage umfasst eine Fahrzeugeigenarten erfassende Sensoreinrichtung, wobei das zu waschende Fahrzeug mittels der erfassten Fahrzeugeigenarten einer von mehreren vorgegebenen Fahrzeugklassen zuordnenbar ist und der Betrieb des mindestens einen Waschwerkzeuges selbsttätig an die dem Fahrzeug zugeordnete Fahrzeugklasse anpassbar ist. Wie bereits erläutert, ermöglicht dies ein selbsttätiges Waschen unterschiedlicher Fahrzeuge, beispielsweise Personenkraftwagen, Kleintransporter und Nutzfahrzeuge, insbesondere Lastkraftwagen und Sattelzüge, ohne dass hierzu manuell ein bestimmtes Waschprogramm ausgewählt werden muss und ohne dass die Gefahr einer Beschädigung des Fahrzeuges oder des mindestens einen Waschwerkzeuges besteht.

Mindestens ein Waschwerkzeug der Fahrzeugwaschanlage ist in Abhängigkeit von der Kontur des Fahrzeuges relativ zum Fahrzeug bewegbar, wobei dem Waschwerkzeug zur Erfassung der Kontur des Fahrzeuges mindestens ein erstes Sensorglied zugeordnet ist und die Sensoreinrichtung der Fahrzeugwaschanlage zur Erfassung von Fahrzeugeigenarten mindestens ein zweites Sensorglied aufweist. Zur Bestimmung der Fahrzeugkontur kommt somit mindestens ein erstes Sensorglied zum Einsatz und zur Bestimmung von Fahrzeugeigenarten kommt mindestens ein zweites Sensorglied zum Einsatz. Dies ermöglicht es insbesondere, Fahrzeugeigenarten bereits zu einem Zeitpunkt zu bestimmten, zu dem mittels des mindestens einen ersten Sensorgliedes die Kontur des Fahrzeuges noch nicht erfasst werden kann. Dies kann beispielsweise dann der Fall sein, wenn zu Beginn einer Fahrzeugwäsche das Fahrzeug lediglich mit dem zweiten Sensorglied erfasst werden kann, aber noch nicht mit dem ersten Sensorglied.

Die Fahrzeugwaschanlage umfasst ein relativ zum Fahrzeug verfahrbares Portal, an dem das mindestens eine Waschwerkzeug verstellbar gelagert ist und an dem zumindest ein zweites Sensorglied gehalten ist, wobei das zweite Sensorglied in Fahrtrichtung, die das Portal zu Beginn des Waschvorganges aufweist, vor dem mindestens einen Waschwerkzeug angeordnet ist. Das zweite Sensorglied ist somit dem Waschwerkzeug voreilend angeordnet. Dies gibt auf konstruktiv einfache Weise die Möglichkeit, bestimmte Fahrzeugeigenarten, beispielsweise den Verlauf der Kontur des Fahrzeuges in dessen Frontbereich, bereits zu einem Zeitpunkt zu erfassen, zu dem das Waschwerkzeug noch einen Abstand zum Fahrzeug einnimmt. Der Betrieb des Waschwerkzeuges kann dann bereits zu Beginn des Waschvorganges an die Fahrzeugklasse des Fahrzeuges angepasst werden. Beispielsweise kann bei Einsatz einer Waschbürste deren Anpressdruck bereits zu Beginn des Waschvorganges zum Waschen eines Personenkraftwagens geringer gewählt werden als zum Waschen eines Lastkraftwagens.

Bei der erfindungsgemäßen Fahrzeugwaschanlage sind mittels der Sensoreinrichtung Lücken in der Kontur des Fahrzeuges in Abhängigkeit vom Abstand zum vorderen Ende des Fahrzeuges erfassbar. Dies ermöglicht eine einfache Klassifizierung des Fahrzeuges, wobei zwischen Lastkraftwagen mit Ladefläche einerseits und Sattelzugmaschinen mit Sattelauflieger andererseits unterschieden wird, da bei letzteren die vom Dach des Fahrzeuges ausgehende Lücke der Fahrzeugkontur in einem kürzeren Abstand zum vorderen Ende des Fahrzeuges angeordnet ist, beispielsweise in einem Abstandsbereich von maximal 6 Meter, als bei Lastkraftwagen mit Ladefläche und Anhänger. Bei Lastkraftwagen mit Anhänger ist die Lücke zwischen dem Lastkraftwagen und dem Anhänger üblicherweise in einem Abstandsbereich von mindestens 6 Meter bezogen auf das vordere Ende des Fahrzeuges angeordnet.

Bevorzugt ist mittels der Sensoreinrichtung die Höhe des Fahrzeuges in mindestens einem vorgegebenen Abstand zum vorderen Ende des Fahrzeuges erfassbar. Wie bereits erwähnt, ermöglicht dies auf konstruktiv einfache Weise, den Verlauf der Kontur des Fahrzeuges in dessen Frontbereich zu erfassen.

Bei einer vorteilhaften Ausführungsform der erfindungsgemäßen Fahrzeugwaschanlage kann mittels der Sensoreinrichtung geprüft werden, ob das Fahrzeug in mindestens einem vorgegebenen Abstand zum vorderen Ende des Fahrzeuges eine vorbestimmte Höhe überschreitet. Dies ermöglicht eine Unterscheidung zwischen Personenkraftwagen und Lastkraftwagen, da sich letztere bereits in kurzem Abstand zum vorderen Ende des Fahrzeuges bis in Höhe des Fahrzeugdaches erstrecken, wohingegen Personenkraftwagen eine Motorhaube aufweisen, in deren Bereich sie eine vorbestimmte Höhe nicht überschreiten.

Mindestens ein Waschwerkzeug ist bei der erfindungsgemäßen Fahrzeugwaschanlage vorzugsweise als Waschbürste ausgestaltet, deren gegen das Fahrzeug ausgeübter Anpressdruck in Abhängigkeit von der dem Fahrzeug zugeordneten Fahrzeugklasse einstellbar ist. Wie bereits erwähnt, ermöglicht dies auf konstruktiv einfache Weise, den Anpressdruck zum Waschen eines Personenkraftwagens geringer zu wählen als zum Waschen eines Kleintransporters oder eines Lastkraftwagens.

Die erfindungsgemäße Fahrzeugwaschanlage weist günstigerweise mindestens ein Waschwerkzeug auf, das höhenverstellbar gelagert ist und in eine Lücke der Fahrzeugkontur allenfalls bis zu einer vorgegebenen oder vorgebbaren Mindesthöhe absenkbar ist. Dadurch kann eine Beschädigung des Waschwerkzeuges durch eine Deichsel vermieden werden, die in der Lücke zwischen Lastkraftwagen und Anhänger angeordnet ist.

Von Vorteil ist es, wenn die erfindungsgemäße Fahrzeugwaschanlage mindestens ein Waschwerkzeug aufweist, das quer zur Fahrzeuglängsachse in horizontaler Richtung verstellbar ist, wobei das Waschwerkzeug in eine Lücke der Fahrzeugkontur allenfalls bis zu einer vorgegebenen oder vorgebbaren maximalen Eintauchtiefe einführbar ist. Handelt es sich um die Lücke zwischen einer Sattelzugmaschine und einem Sattelauflieger, so ist das quer zur Fahrzeuglängsachse horizontal verstellbare Waschwerkzeug günstigerweise in die Lücke nicht einführbar. Handelt es sich um die Lücke zwischen einem Lastkraftwagen und einem Anhänger, so ist das quer zur Fahrzeuglängsachse horizontal verstellbare Waschwerkzeug in die Lücke bis zu einer maximalen Eintauchtiefe einführbar. Die maximale Eintauchtiefe kann durch die Breite der Deichsel bestimmt sein, die zwischen dem Lastkraftwagen und dem Anhänger angeordnet ist.

Die erfindungsgemäße Fahrzeugwaschanlage weist günstigerweise ein Betriebsdatenerfassungsglied auf, dem die erfassten Fahrzeugeigenarten und/oder die Fahrzeugklasse des Fahrzeuges bereitstellbar ist. Wie bereits erwähnt, ermöglicht dies beispielsweise eine einfache Bestimmung der Kosten der Fahrzeugwäsche, ohne dass hierzu die Art des Fahrzeuges vorgegeben werden muss, beispielsweise durch Eingabe eines Zahlencodes oder durch die Bereitstellung eines berührungsbehaftet oder berührungslos lesbaren Datenspeichers, der mit dem Fahrzeug mitgeführt werden muss. Die Bestimmung der Kosten der Fahrzeugwäsche kann vielmehr unter Berücksichtigung der mittels der Sensoreinrichtung erfassten Fahrzeugeigenarten erfolgen und/oder unter Berücksichtigung der Fahrzeugklasse des Fahrzeuges, die aufgrund der erfassten Fahrzeugeigenarten bestimmt wurde. Dies vereinfacht die Handhabung der Fahrzeugwaschanlage.

Die nachfolgende Beschreibung einer bevorzugten Ausführungsform der Erfindung dient im Zusammenhang mit der Zeichnung der näheren Erläuterung. Es zeigen:
- Figur 1:: eine schematische Vorderansicht einer erfindungsgemäßen Fahrzeugwaschanlage;
- Figur 2:: eine schematische Seitenansicht der Fahrzeugwaschanlage aus Figur 1;
- Figur 3:: eine schematische Darstellung eines Waschvorgangs mit Hilfe einer Dachbürste der Fahrzeugwaschanlage aus Figur 1 bei einem Personenkraftwagen;
- Figur 4:: eine schematische Darstellung eines Waschvorgangs mit Hilfe einer Dachbürste der Fahrzeugwaschanlage aus Figur 1 bei einem Kleintransporter;
- Figur 5:: eine schematische Darstellung eines Waschvorgangs mit Hilfe einer Dachbürste der Fahrzeugwaschanlage aus Figur 1 bei einem Lastkraftwagen;
- Figur 6:: eine schematische Darstellung eines Waschvorgangs mit Hilfe einer Dachbürste der Fahrzeugwaschanlage aus Figur 1 bei einem Lastkraftwagen, der auf dem Fahrzeugdach einen Spoiler trägt;
- Figur 7:: eine schematische Darstellung eines Waschvorgangs mit Hilfe einer Dachbürste der Fahrzeugwaschanlage aus Figur 1 bei einem Sattelzug;
- Figur 8:: eine schematische Darstellung eines Waschvorgangs mit Hilfe einer Dachbürste der Fahrzeugwaschanlage aus Figur 1 bei einem Lastkraftwagen mit Anhänger;
- Figur 9:: eine Seitenansicht des Anhängers aus Figur 8; und
- Figur 10:: eine Draufsicht auf den Anhänger aus Figur 8 bei einem Waschvorgang mit Hilfe zweier Seitenbürsten der Fahrzeugwaschanlage aus Figur 1.

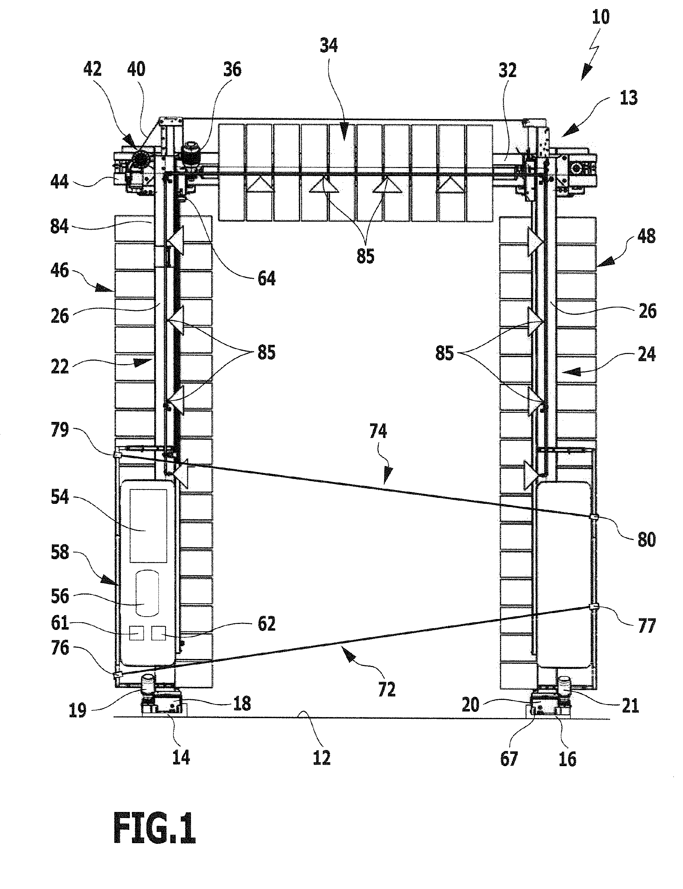

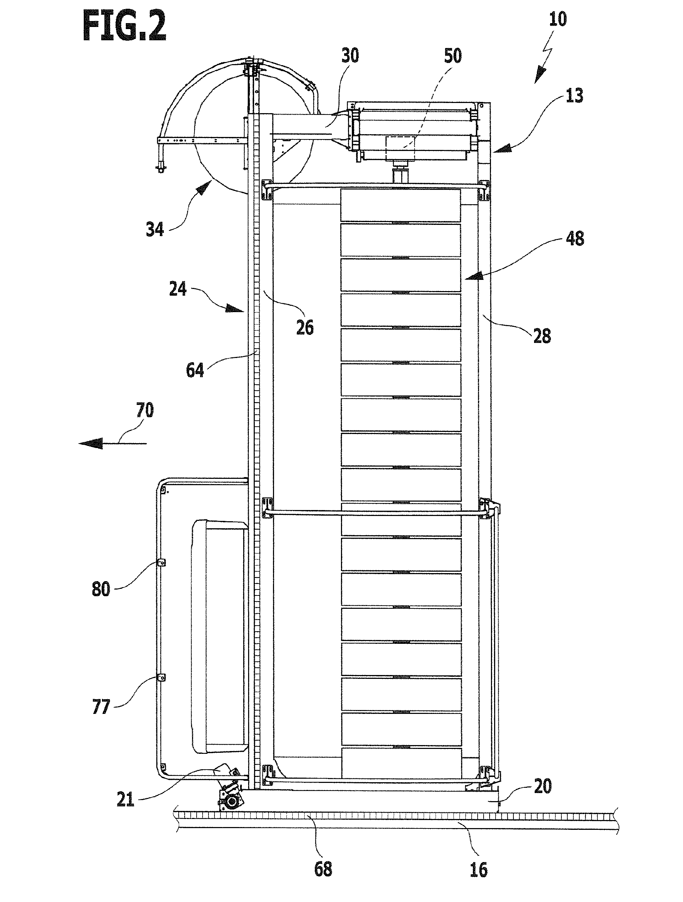

In den Figuren 1 und 2 ist schematisch eine erfindungsgemäße Fahrzeugwaschanlage 10 dargestellt, die in Form einer Portalwaschanlage ausgestaltet ist und ein Waschportal 13 aufweist. Die Fahrzeugwaschanlage 10 nimmt eine Klassifizierung der zu waschenden Fahrzeuge vor, indem jedes Fahrzeug anhand sensorisch erfasster Fahrzeugeigenarten einer bestimmten Fahrzeugklasse zugeordnet wird, und der Betrieb der Fahrzeugwaschanlage erfolgt in Abhängigkeit von der jeweiligen Fahrzeugklasse. Die Fahrzeugwaschanlage 10 steht auf einer Stellfläche 12 und weist zwei im Abstand zueinander angeordnete, geradlinige Transportschienen 14, 16 auf, an denen das Waschportal 13 mit Hilfe von zwei längs der Transportschienen 14 bzw. 16 verfahrbaren Transportwagen 18, 20 gelagert ist. Auf jedem Transportwagen 18, 20 steht eine Stützeinrichtung 22 bzw. 24 des Waschportals 13. Die beiden Stützeinrichtungen 22, 24 sind identisch ausgebildet nach Art eines Rahmens, der eine erste Stütze 26 und eine zweite Stütze 28 aufweist, die über einen parallel zu den Transportschienen 14, 16 ausgerichteten Längsträger 30 starr miteinander verbunden sind. Die Längsträger 30 der beiden Stützeinrichtungen 22, 24 sind über einen Querträger 32 starr miteinander verbunden.

An den beiden ersten Stützen 26 der Stützeinrichtungen 22, 24 ist ein erstes Waschwerkzeug in Form einer Dachbürste 34 höhenverstellbar gelagert. Die Dachbürste 34 weist einen Dachbürstenmotor 36 auf, mit dessen Hilfe sie um eine horizontal ausgerichtete Drehachse in Drehung versetzt werden kann. Über Tragmittel 40 ist die Dachbürste 34 mit einer motorischen Wickeleinrichtung 42 gekoppelt, die am oberen Ende der ersten Stütze 26 der Stützeinrichtung 22 gehalten ist und einen Wickel motor 44 aufweist. Mit Hilfe des Wickelmotors 44 kann die Wickeleinrichtung 42 in Drehung versetzt und dadurch das Tragmittel 40 auf- und abgewickelt werden. Dies erlaubt es, die Dachbürste 34 entlang der ersten Stützen 26 in vertikaler Richtung zu verfahren, so dass sie beim Waschen eines Fahrzeuges der Fahrzeugkontur folgen kann. Dies wird nachfolgend noch näher erläutert.

Am Querträger 32 sind zwei weitere Waschwerkzeuge in Form einer ersten Seitenbürste 46 und einer zweiten Seitenbürste 48 längs des Querträgers 32 in horizontaler Richtung verstellbar gehalten. Die beiden Seitenbürsten 46, 48 sind identisch ausgestaltet. Sie weisen jeweils einen Seitenbürstenmotor 50 auf, mit dessen Hilfe sie um eine vertikal ausgerichtete Drehachse in Drehung versetzt werden können. Den Seitenbürsten 46 und 48 ist außerdem jeweils ein an sich bekannter und deshalb in der Zeichnung zur Erzielung einer besseren Übersicht nicht dargestellter Vorschubmotor zugeordnet, mit dessen Hilfe die beiden Seitenbürsten 46, 48 entlang des Querträgers 32 verfahrbar sind.

Zu ihrer Steuerung weist die Fahrzeugwaschanlage 10 eine Steuereinrichtung 54 auf und für Dokumentationszwecke und zur Bestimmung der Kosten einer Fahrzeugwäsche weist die Fahrzeugwaschanlage 10 ein Betriebsdatenerfassungsglied 56 auf, das zusammen mit der Steuereinrichtung 54 in einen Steuerblock 58 integriert ist, der an der der ersten Seitenbürste 46 abgewandten Vorderseite der ersten Stütze 26 der Stützeinrichtung 22 gehalten ist.

Die Transportwagen 18 und 20 umfassen jeweils einen Fahrmotor 19 bzw. 21 zum Verfahren des Waschportals 13 entlang der Transportschienen 14 bzw. 16. Die Steuereinrichtung 54 ist über in der Zeichnung nicht dargestellte Verbindungskabel mit den Fahrmotoren 19, 21 sowie mit dem Dachbürstenmotor 36 und den Seitenbürstenmotoren 50 verbunden.

Dem Dachbürstenmotor 36 ist ein erster Stromsensor 61 zugeordnet, mit dessen Hilfe der Motorstrom des Dachbürstenmotors 36 erfasst werden kann. Der erste Stromsensor 61 steht mit der Steuereinrichtung 54 in elektrischer Verbindung.

Den beiden Seitenbürstenmotoren 50 ist ein zweiter Stromsensor 62 zugeordnet, mit dessen Hilfe der Motorstrom von jedem der Seitenbürstenmotoren 50 erfasst werden kann. Auch der zweite Stromsensor 62 steht mit der Steuereinrichtung 54 in elektrischer Verbindung.

Zur Bestimmung ihrer vertikalen Position ist der Dachbürste 34 ein erster Positionssensor 64 zugeordnet, der mit einer an der ersten Stütze 26 der Stützeinrichtung 22 angeordneten ersten Wegmarkierung 65 zusammenwirkt und über eine in der Zeichnung nicht dargestellte Sensorleitung mit der Steuereinrichtung 54 verbunden ist. Mit Hilfe des ersten Positionssensors 64 und der ersten Wegmarkierung 65 kann die vertikale Position der Dachbürste 34 erfasst werden.

Am Transportwagen 20 ist ein zweiter Positionssensor 67 angeordnet, der mit einer zweiten Wegmarkierung 68 zusammenwirkt, die an der Transportschiene 16 angeordnet ist. Über eine in der Zeichnung nicht dargestellte Sensorleitung ist der zweite Positionssensor 67 mit der Steuereinrichtung 54 verbunden. Mit Hilfe des zweiten Positionssensors 67 und der zweiten Wegmarkierung 68 kann die horizontale Position des Waschportals 13 erfasst werden.

Zum Waschen eines Fahrzeugs kann das Waschportal 13 mit der daran höhenverstellbar gehaltenen Dachbürste 34 und mit den daran horizontal verstellbaren Seitenbürsten 46, 48 entlang der Transportschienen 14, 16 in Vorwärtsrichtung 70 und entgegen der Vorwärtsrichtung 70 hin und her verfahren werden. Die Position des Waschportals 13 wird mittels des zweiten Positionssensors 67 und der zugeordneten zweiten Wegmarkierung 68 ermittelt.

In Vorwärtsrichtung 70 vor der Dachbürste 34 sind an den ersten Stützen 26, 28 eine schräg zur Horizontalen ausgerichtete untere Lichtschranke 72 und eine schräg zur Horizontalen ausgerichtete obere Lichtschranke 74 gehalten. Die untere Lichtschranke 72 umfasst einen ersten Lichtsender 76, der mit einem ersten Lichtempfänger 77 zusammenwirkt, und die obere Lichtschranke 74 umfasst einen zweiten Lichtsender 79, der mit einem zweiten Lichtempfänger 80 zusammenwirkt. Die Lichtempfänger 77 und 80 sind über in der Zeichnung nicht dargestellte elektrische Verbindungsleitungen mit der Steuereinrichtung 54 verbunden.

Zum Waschen eines Fahrzeugs kann das Waschportal 13 am stehenden Fahrzeug entlang verfahren werden, wobei die Dachbürste 34 und die Seitenbürsten 46, 48 in Drehung versetzt und entlang der Oberfläche des Fahrzeugs bewegt werden. Sowohl die Dachbürste 34 als auch die beiden Seitenbürsten 46, 48 folgen hierbei selbsttätig der Kontur des Fahrzeugs. Die Konturverfolgung wird mit Hilfe der Stromsensoren 61, 62 erzielt, die den Motorstrom des Dachbürstenmotors 36 bzw. der Seitenbürstenmotoren 50 überwachen. Der Motorstrom ist ein Maß für den Anpressdruck, den die Dachbürste 34 und die Seitenbürsten 46, 48 auf das zu reinigende Fahrzeug ausüben. Trifft die Dachbürste 34 bzw. treffen die Seitenbürsten 46, 48 auf die Oberfläche des Fahrzeugs, so erhöht sich der Motorstrom bis zu einem Sollwert, der einem gewünschten Anpressdruck entspricht. Bei einer unzulässigen Annäherung an das Fahrzeug erhöht sich der Motorstrom über einen vorgegebenen Sollwert hinaus. Dies wird von der Steuereinrichtung 54 erkannt, die daraufhin den Wickelmotor 44 bzw. den Vorschubmotoren der Seitenbürsten 46, 48 ein Signal bereitstellt, um die Dachbürste 34 bzw. die Seitenbürsten 46, 48 in die dem zu reinigenden Fahrzeug abgewandte Richtung so weit zu bewegen, bis wieder der Sollwert des Motorstroms und damit der gewünschte Anpressdruck erreicht ist.

Alternativ oder ergänzend zur Dachbürste 34 und/oder zu den Seitenbürsten 46, 48 kann die Fahrzeugwaschanlage 10 auch vertikal bzw. horizontal verstellbare Düsenbalken aufweisen, die jeweils eine Vielzahl von Reinigungsdüsen umfassen. Mittels der Reinigungsdüsen kann eine Reinigungsflüssigkeit, vorzugsweise Wasser, mit Druck auf das zu reinigende Fahrzeug gerichtet werden. Auch derartige Düsenbalken können beim Verfahren des Waschportals 13 entlang des zu reinigenden Fahrzeugs selbsttätig der Kontur des Fahrzeugs folgen. Hierzu ist den Düsenbalken jeweils eine Lichtschranke zugeordnet, die in Zustellrichtung der Düsenbalken vor den Düsenbalken angeordnet ist. Mittels der Lichtschranken kann in bekannter Weise sichergestellt werden, dass die Düsenbalken selbsttätig einen optimalen Abstand zum zu reinigenden Fahrzeug einnehmen.

Die Fahrzeugwaschanlage 10 kommt sowohl zum Waschen von Personenkraftwagen als auch zum Waschen von Kleintransportern und Nutzfahrzeugen, insbesondere Lastkraftwagen zum Einsatz. Der Betrieb der Waschwerkzeuge, im dargestellten Ausführungsbeispiel also der Betrieb der Dachbürste 34 und der Seitenbürsten 46, 48, wird selbsttätig an die Fahrzeugklasse des Fahrzeuges angepasst. Hierzu werden mittels der beiden Lichtschranken 72, 74 und mittels der Positionssensoren 64 und 67 Fahrzeugeigenarten erfasst und aus den Fahrzeugeigenarten wird die Fahrzeugklasse des Fahrzeugs selbsttätig bestimmt. Dies wird nachfolgend näher erläutert. Die Lichtschranken 72, 74 bilden in Kombination mit den Positionssensoren 64 und 67 und den zugeordneten Wegmarkierungen 75, 78 eine Sensoreinrichtung der Fahrzeugwaschanlage 10, mit deren Hilfe Fahrzeugeigenarten erfasst und die Fahrzeugklasse des Fahrzeugs selbsttätig bestimmt werden kann.

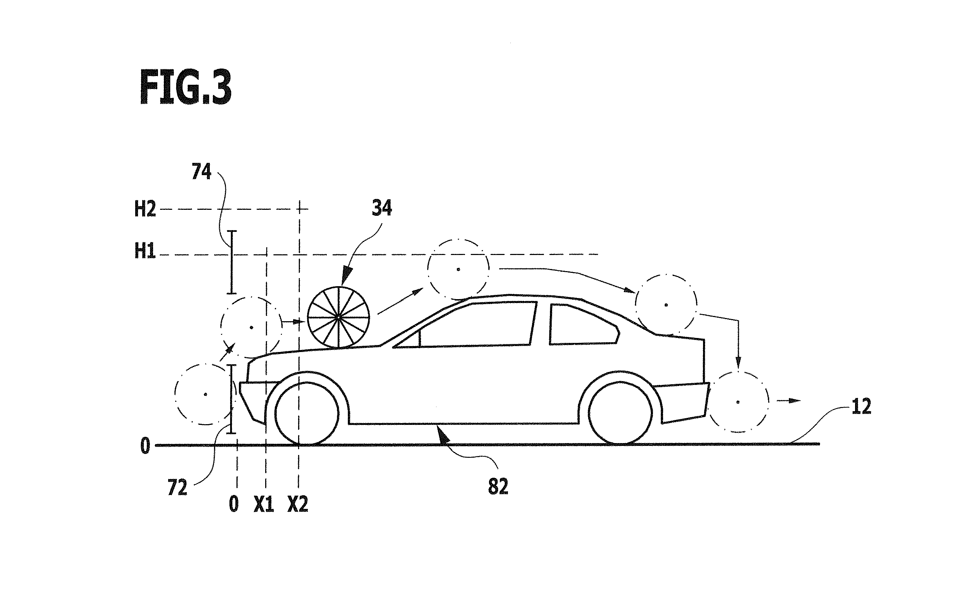

Die Reinigung eines Personenkraftwagens 82 mittels der Dachbürste 34 ist in Figur 3 schematisch dargestellt. In einem ersten Schritt wird mittels der unteren Lichtschranke 72 das vordere Ende des Personenkraftwagens 82 erfasst. Dies erfolgt dadurch, dass das Waschportal 13 in Vorwärtsrichtung 70 so weit in Richtung auf den Personenkraftwagen 82 verfahren wird, bis die untere Lichtschranke 72 unterbrochen wird. Mittels des zweiten Positionssensors 67 und der zugeordneten zweiten Wegmarkierung 68 wird die dabei vom Waschportal 13 eingenommene Position erfasst. Diese Position stellt für das nachfolgende Waschverfahren die Nullstellung des Waschportals 13 dar.

In einem nachfolgenden Schritt wird die Dachbürste 34 so weit vertikal nach unten bewegt, bis sie ihre untere Endstellung erreicht. Eine Reinigungsflüssigkeit wird auf den Personenkraftwagen 82 aufgesprüht. Hierzu ist am Waschportal 13 ein Sprühbogen 84 gehalten mit einer Vielzahl von Sprühdüsen 85. Das Waschportal 13 fährt nun am Personenkraftwagen 82 entlang, wobei die Dachbürste 34 selbsttätig der Kontur des Personenkraftwagens 82 folgt, wie dies voranstehend erläutert wird. Erreicht das Waschportal 13 eine vorgebbare erste Horizontalstellung X1, so prüft die Steuereinrichtung 54, ob die obere Lichtschranke 74 unterbrochen ist. Aufgrund der relativ flachen Fahrzeugfront des Personenkraftwagens 82 ist dies nicht der Fall. Dies signalisiert der Steuereinrichtung 54, dass aktuell kein Lastkraftwagen gewaschen wird sondern entweder ein Personenkraftwagen oder ein Kleintransporter. Dies veranlasst die Steuereinrichtung 54, den zunächst gewählten, verhältnismäßig geringen Anpressdruck der Dachbürste 34 für das weitere Waschen des Personenkraftwagens 82 beizubehalten.

Erreicht das Waschportal 13 beim weiteren Verfahren in Vorwärtsrichtung 70 eine vorgegebene zweite Horizontalstellung X2, so wird erneut geprüft, ob die obere Lichtschranke 74 unterbrochen ist. Dies ist bei der Reinigung des Personenkraftwagens 82 nicht der Fall, wohl aber bei der Reinigung eines Kleintransporters, wie nachfolgend noch näher erläutert wird.

Der weitere Waschvorgang erfolgt nun nach einem Waschprogramm für Personenkraftwagen 82 und die Information, dass ein Personenkraftwagen gewaschen wird, wird von der Steuereinrichtung 54 an das Betriebsdatenerfassungsglied 56 weitergegeben, das daraufhin die Kosten für die Fahrzeugwäsche bestimmt.

Ergänzend zur Bestimmung der Fahrzeugklasse mittels der oberen Lichtschranke 74 und des zweiten Positionssensors 67 bestimmt die Fahrzeugwaschanlage 10 die Fahrzeugklasse dadurch, dass bei Erreichen der ersten Horizontalstellung X1 und bei Erreichen der zweiten Horizontalstellung X2 des Waschportals 13 die Vertikalstellung der Dachbürste 34 mit einer vorgebbaren ersten Hubhöhe H1 und einer vorgebbaren zweiten Hubhöhe H2 verglichen wird. Hat das Waschportal 13 die erste Horizontalstellung X1 erreicht und ist die mittels des ersten Positionssensors 34 ermittelte Vertikalstellung der Dachbürste 34 niedriger als die erste Hubhöhe H1, so zeigt dies, dass das zu waschende Fahrzeug über eine niedrige Fahrzeugfront verfügt und es sich deshalb um einen Personenkraftwagen handelt. Erreicht das Waschportal 13 die zweite vorgebbare Horizontalstellung X2, so erfolgt eine erneute Abfrage der aktuellen Vertikalstellung der Dachbürste 34 und diese wird mit der vorgebbaren zweiten Hubhöhe H2 verglichen. Bei der Reinigung eines Personenkraftwagens 82 ist die Vertikalstellung der Dachbürste 34 niedriger als die zweite Hubhöhe, so dass das erste Prüfungsergebnis bestätigt wird, wonach es bei dem sich zu waschenden Fahrzeug um einen Personenkraftwagen handelt. Bei der Reinigung eines Kleintransporters befindet sich die Dachbürste 34 in einem vertikalen Bereich zwischen der ersten Hubhöhe H1 und der zweiten Hubhöhe H2, wenn das Waschportal 13 die zweite Horizontalstellung X2 erreicht hat. Dies wird nachfolgend noch näher erläutert. Bei einem Lastkraftwagen ist die Dachbürste 34 bereits oberhalb der ersten Hubhöhe H1, wenn das Waschportal 13 die erste Horizontalstellung X1 erreicht hat. Ergänzend zum Signal der oberen Lichtschranke 74 kann somit auch das Signal des ersten Positionssensors 34 in Abhängigkeit vom Signal des zweiten Positionssensors 67 zur Erkennung der Fahrzeugklasse verwendet werden.

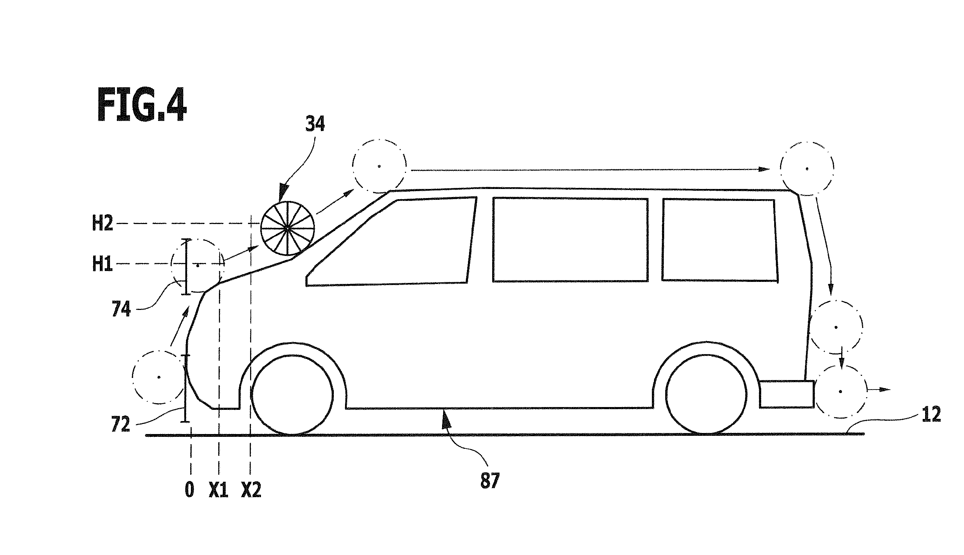

Das Waschen eines Kleintransporters 87 mittels der Dachbürste 34 ist in Figur 4 schematisch dargestellt. Wiederum wird in einem ersten Schritt das Waschportal 13 so weit in Vorwärtsrichtung 70 verfahren, bis die untere Lichtschranke 72 unterbrochen wird. Dies signalisiert der Steuereinrichtung 54 das Erreichen des vorderen Endes des Kleintransporters 87. Die Dachbürste 34 folgt dann beim weiteren Verfahren des Waschportals 13 selbsttätig der Kontur des Kleintransporters 87, wie dies voranstehend bereits erläutert wurde. Erreicht das Waschportal 13 die erste Horizontalstellung X1, so prüft die Steuereinrichtung 54, ob die obere Lichtschranke 74 unterbrochen ist. Dies ist beim Waschen eines Kleintransporters 87 nicht der Fall sondern nur beim Waschen eines Lastkraftwagens 89. Erreicht das Waschportal 13 die zweite Horizontalstellung X2, so prüft die Steuereinrichtung 54 erneut, ob die obere Lichtschranke 74 unterbrochen ist. Beim Waschen des Kleintransporters 87 ist dies im Unterschied zum Waschen des Personenkraftwagens 82 der Fall. Die Steuereinrichtung 54 erkennt somit selbsttätig, dass aktuell ein Kleintransporter 87 gewaschen wird, und diese Information wird von der Steuereinrichtung 54 an das Betriebsdatenerfassungsglied 56 weitergegeben, so dass dieses die Kosten für das Waschen des Kleintransporters 87 bestimmen kann. Das weitere Verfahren der Dachbürste 34 entlang des Kleintransporters 87 erfolgt dann in gleicher Weise wie beim Waschen des Personenkraftwagens 82.

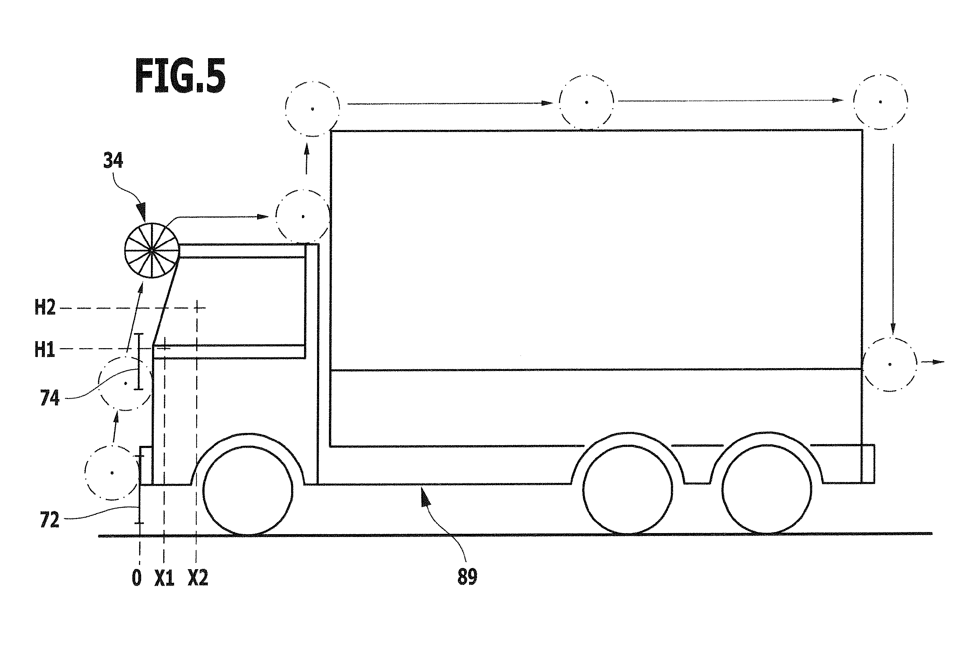

Die Reinigung eines Lastkraftwagens 89 mittels der Dachbürste 34 ist in Figur 5 schematisch dargestellt. Wiederum wird das Waschportal 13 zu Beginn des Waschvorgangs so weit in Vorwärtsrichtung 70 zum Lastkraftwagen 89 verfahren, bis die untere Lichtschranke 72 unterbrochen wird. Dies signalisiert der Steuereinrichtung 54, dass das Waschportal 13 das vordere Ende des Lastkraftwagens 89 erreicht hat. Nachdem mit Hilfe des Sprühbogens 84 Reinigungsflüssigkeit auf die Front des Lastkraftwagens 89 aufgebracht wurde, wird die Dachbürste 34 vertikal in ihre untere Endstellung verfahren und das Waschportal 13 wird in Vorwärtsrichtung 70 bewegt, so dass die Dachbürste 34 die Front des Lastkraftwagens 89 berührt und anschließend beim weiteren Verfahren des Waschportals 13 selbsttätig der Kontur des Lastwagens 89 folgt, wie dies voranstehend bereits erläutert wurde. Erreicht das Waschportal 13 die erste Horizontalstellung X1, so wird von der Steuereinrichtung 54 geprüft, ob die obere Lichtschranke 74 unterbrochen ist. Beim Waschen des Lastkraftwagens 89 ist dies der Fall. Die Steuereinrichtung 54 erhöht daraufhin den Anpressdruck der Dachbürste 34, da diese beim Waschen eines Lastkraftwagens 89 mit einer größeren Fläche am Lastkraftwagen 89 anliegt als dies bei einem Personenkraftwagen 82 der Fall ist. Damit ein gleich bleibend gutes Reinigungsergebnis erzielt wird, wird beim weiteren Waschen des Lastkraftwagens 89 der Anpressdruck der Dachbürste 34 erhöht.

Um eine Beschädigung der Dachbürste 34 durch eine Anhängerkupplung des Lastkraftwagens 89 zu vermeiden, wird die Dachbürste 34 bei Erreichen des hinteren Endes des Lastkraftwagens 89 nur bis zu einer vorgebbaren Mindesthöhe abgesenkt, wohingegen beim Reinigen eines Personenkraftwagens 82 oder auch beim Reinigen eines Kleintransporters 87 die Dachbürste 34 am hinteren Ende des Fahrzeugs bis zu ihrer unteren Endstellung bewegt wird.

Die Information, dass es sich bei dem zu waschenden Fahrzeug um einen Lastkraftwagen 89 handelt, veranlasst die Steuereinrichtung 54 darüber hinaus, die Bewegung der ansonsten der Kontur des Lastkraftwagens 89 folgenden Dachbürste 34 in bestimmten Horizontalbereichen des Waschportals 13 einzuschränken. Dies wird nachfolgend noch näher erläutert.

Wie bereits erwähnt, kann ergänzend zum Unterbrechen der oberen Lichtschranke 74 bei Erreichen der ersten Horizontalstellung X1 oder der zweiten Horizontalstellung X2 auch die Vertikalstellung der Dachbürste 34 zum Erkennen der Fahrzeugklasse in Form des Lastkraftwagens 89 verwendet werden. Hierzu kann bei Erreichen der ersten Horizontalstellung X1 die Vertikalstellung der Dachbürste 34 mit der vorgebbaren ersten Hubhöhe H1 verglichen werden. Hat das Waschportal 13 die erste Horizontalstellung X1 erreicht, so befindet sich die Dachbürste 34 bereits oberhalb der ersten Hubhöhe H1. Hat das Waschportal 13 die zweite Horizontalstellung X2 erreicht, so befindet sich die Dachbürste 34 bereits oberhalb der zweiten Hubhöhe H2. Auch aufgrund dieser Informationen kann die Steuereinrichtung 54 selbsttätig erkennen, dass es sich bei dem zu waschenden Fahrzeug um einen Lastkraftwagen 89 handelt.

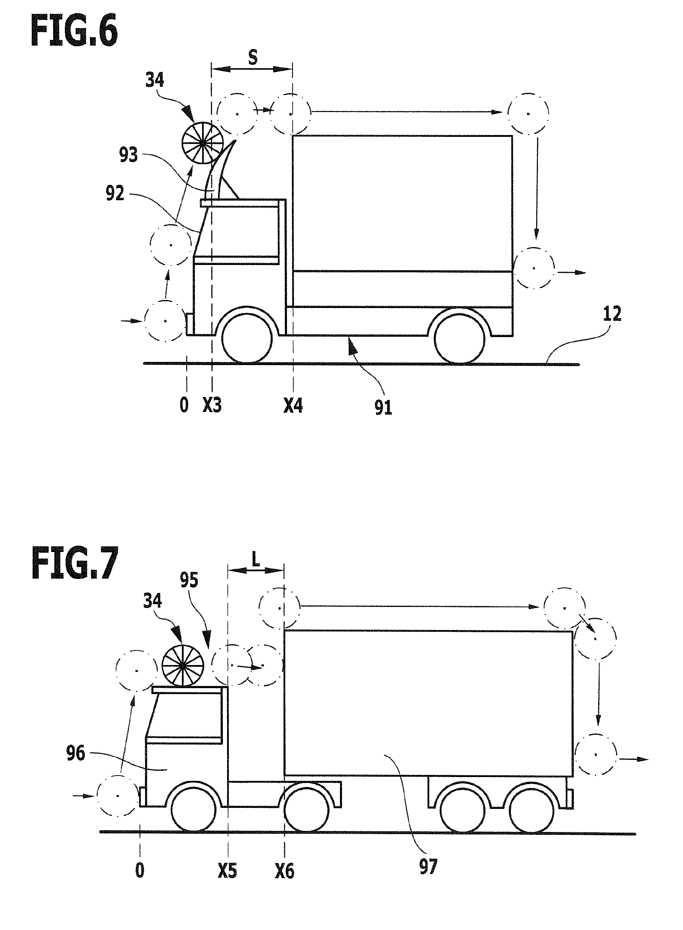

In Figur 6 ist das Waschen eines Lastkraftwagens 91 mittels der Dachbürste 34 dargestellt, wobei der Lastkraftwagen 91 auf seiner Fahrerkabine 92 einen Spoiler 93 trägt. Die aus der Auswertung des Zustands der oberen Lichtschranke 74 und der Vertikalstellung der Dachbürste 34 in Abhängigkeit von der ersten Horizontalstellung X1 und der zweiten Horizontalstellung X2 des Waschportals 13 gewonnene Information, dass es sich beim aktuell zu waschenden Fahrzeug um einen Lastkraftwagen handelt, veranlasst die Steuereinrichtung 54, die Bewegung der Dachbürste 34 in einem vorgebbaren Horizontalbereich zwischen einer dritten Horizontalstellung X3 und einer vierten Horizontalstellung X4 dahingehend einzuschränken, dass die Dachbürste 34 in diesem Horizontalbereich nicht abgesenkt werden kann. Die Dachbürste 34 folgt daher im sogenannten Spoilerbereich, der in Figur 4 durch den Pfeil S veranschaulicht ist, nicht der Kontur des Lastkraftwagens 91. Vielmehr kann die Dachbürste 34 im Spoilerbereich S lediglich horizontal und vertikal nach oben bewegt werden, nicht aber vertikal nach unten. Dadurch wird vermieden, dass der Spoiler 93 oder die Dachbürste 34 in diesem Bereich beschädigt werden. Bei Überschreiten der vierten Horizontalstellung X4 folgt die Dachbürste 34 wieder selbsttätig der Kontur des Lastkraftwagens 91.

In Figur 7 ist das Waschen eines Sattelzugs 95 mit Hilfe der Dachbürste 34 schematisch dargestellt. Der Sattelzug umfasst in üblicher Weise eine Zugmaschine 96 und einen Sattelauflieger 97. Die Front der Zugmaschine 96 ist weitgehend identisch mit der Front eines üblichen Lastkraftwagens. Allerdings weist der Sattelzug 95 zwischen der Zugmaschine 96 und dem Sattelauflieger 97 eine Lücke auf, in der sich üblicherweise Verbindungsleitungen befinden, die die Zugmaschine 96 mit dem Sattelauflieger 97 verbinden. Um eine Beschädigung dieser Verbindungsleitungen durch die Dachbürste 34 zu vermeiden, wird die Bewegung der Dachbürste 34 im Bereich der Lücke L zwischen der Zugmaschine 96 und dem Sattelauflieger 97 eingeschränkt. Die Information, dass es sich vorliegend um einen Sattelzug 95 handelt, erhält die Steuereinrichtung 54 durch Auswertung des Zustands der oberen Lichtschranke 74 innerhalb eines vorgebbaren Horizontalbereiches, der durch eine fünfte Horizontalstellung X5 und durch eine sechste Horizontalstellung X6 definiert wird.

Wird beim Verfahren des Waschportals 13 in Vorwärtsrichtung 70 die der Dachbürste 34 voreilende obere Lichtschranke 74 im Bereich zwischen den Horizontalstellungen X5 und X6 freigegeben, so wird dies von der Steuereinrichtung 54 dahingehend interpretiert, dass es sich bei dem zu waschenden Fahrzeug um einen Sattelzug 95 handelt. Daraufhin wird die Bewegung der Dachbürste 34 im Bereich der Lücke L dahingehend eingeschränkt, dass die Dachbürste 34 lediglich horizontal sowie vertikal nach oben bewegt werden kann. Die restliche Reinigung des Sattelzugs 95 erfolgt in gleicher Weise wie die Reinigung des Lastkraftwagens 89.

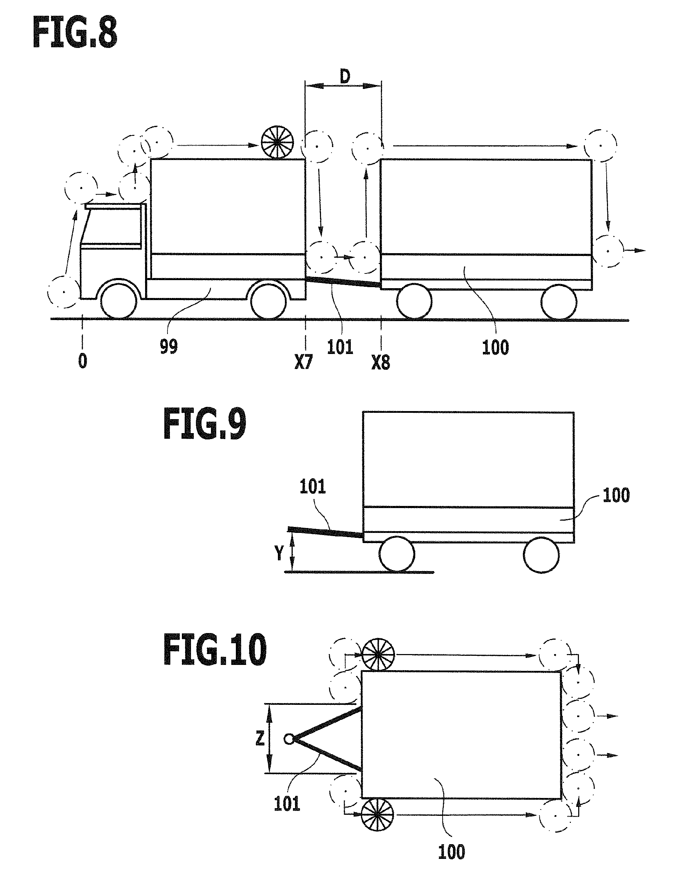

Handelt es sich bei dem zu waschenden Fahrzeug um einen Lastkraftwagen mit Anhänger, so wird auch dies von der Steuereinrichtung 54 selbsttätig erkannt. Das Waschen eines Lastkraftwagens 99 mit Anhänger 100 ist in Figur 8 schematisch dargestellt. Der Anhänger 100 ist über eine Deichsel 101 mit dem Lastkraftwagen 99 verbunden. Zwischen dem Lastkraftwagen 99 und dem Anhänger 100 befindet sich eine Deichsellücke D, die von der Steuereinrichtung 54 dadurch erkannt wird, dass die obere Lichtschranke 74 in einem vorgebbaren dritten Horizontalbereich, der durch eine siebte Horizontalstellung X7 und eine achte Horizontalstellung X8 definiert wird, freigegeben wird. Die siebte Horizontalstellung X7 ist hierbei größer gewählt als die voranstehend erläuterte sechste Horizontalstellung X6, die zum Erkennen einer Lücke zwischen der Zugmaschine 96 und dem Sattelauflieger 97 maßgeblich ist. Beispielsweise kann vorgesehen sein, dass der Wert für die siebte Horizontalstellung X7 mindestens 6 m beträgt, wohingegen der Wert für die sechste Horizontalstellung X6 weniger als 6 m beträgt. Dadurch ist der Steuereinrichtung 54 eine Unterscheidung möglich, ob die obere Lichtschranke 74 beim Verfahren des Waschportals 13 aufgrund der zwischen der Zugmaschine 96 und dem Sattelauflieger 97 bestehenden Lücke L oder aufgrund der zwischen dem Lastkraftwagen 99 und dem Anhänger 100 bestehenden Lücke D freigegeben wird. Erreicht die Dachbürste 34 die siebte Horizontalstellung X7, so gibt die Steuereinrichtung 54 der Dachbürste 34 eine Mindesthöhe vor, die die Dachbürste 34 beim Eintauchen in die Lücke D zwischen dem Lastkraftwagen 99 und dem Anhänger 100 nicht unterschreiten darf. Dadurch ist sichergestellt, dass die Dachbürste 34 nicht durch die Deichsel 101 beschädigt wird. Die Mindesthöhe ist größer gewählt als der vertikale Abstand Y, den die Deichsel 101 zur Stellfläche 12 einnimmt. Dies wird aus Figur 9 deutlich.

Die Information, wonach es sich bei dem zu waschenden Fahrzeug um einen Lastkraftwagen 99 mit Anhänger 100 handelt, veranlasst die Steuereinrichtung 54 darüber hinaus, auch die Bewegung der Seitenbürsten 46 und 48 einzuschränken. In die Lücke D zwischen dem Lastkraftwagen 99 und dem Anhänger 100 können die Seitenbürsten 46, 48 nur bis zu einer vorgegebenen maximalen Einbautiefe einfahren. Die Eintauchtiefe ist derart gewählt, dass die Seitenbürsten 46, 48 durch die Deichsel 101 nicht beschädigt werden. Die Eintauchtiefe wird durch die Breite Z der Deichsel 101 bestimmt. Dies wird aus Figur 10 deutlich.

Mittels der Fahrzeugwaschanlage 10 kann ein Fahrzeug selbsttätig gewaschen werden, wobei der Waschvorgang an die Fahrzeugklasse des jeweiligen Fahrzeugs selbsttätig angepasst wird und die Kosten für das Waschen des Fahrzeugs in Abhängigkeit von der Fahrzeugklasse selbsttätig bestimmt werden können. Die Zuordnung des Fahrzeugs zu einer bestimmten Fahrzeugklasse erfolgt anhand von Fahrzeugeigenarten, die sensorisch erfasst werden. Zum Waschen eines Personenkraftwagens 82 wird selbsttätig ein geringerer Anpressdruck für die Dachbürste 34 eingestellt als zum Waschen eines Lastkraftwagens. Darüber hinaus wird bei beim Waschen eines Lastkraftwagens 89, 91, 99 die Bewegung der ansonsten selbsttätig der Kontur des Lastkraftwagens folgenden Dachbürste 34 in vorgebbaren Bereichen eingeschränkt, um eine Beschädigung der Dachbürste 34 oder des Lastkraftwagens zu vermeiden. Dies ermöglicht es, auch Lastkraftwagen 91 zu waschen, die einen Spoiler 93 tragen. Darüber können auch ein Sattelzug 95 und ein Lastkraftwagen 99 mit einem Anhänger 100 zuverlässig gewaschen werden.

## Patentansprüche

1. Verfahren zum selbsttätigen Waschen eines Fahrzeuges (82, 87, 89, 91, 95, 99) in einer Fahrzeugwaschanlage (10), bei dem das Fahrzeug mit Hilfe von mindestens einem relativ zum Fahrzeug motorisch bewegbaren Waschwerkzeug (34, 46, 48) selbsttätig gewaschen wird, dessen Betrieb von einer Steuereinrichtung (54) gesteuert wird, wobei mittels einer Sensoreinrichtung (64, 67, 72, 74) der Fahrzeugwaschanlage (10) Fahrzeugeigenarten erfasst und das zu waschende Fahrzeug (82, 87, 89, 91, 95, 99) aufgrund der erfassten Fahrzeugeigenarten einer von mehreren vorgegebenen Fahrzeugklassen selbsttätig zugeordnet wird und der Betrieb des mindestens einen Waschwerkzeuges (34, 46, 48) selbsttätig an die dem Fahrzeug zugeordnete Fahrzeugklasse angepasst wird, und wobei zumindest eine Fahrzeugeigenart mittels der Sensoreinrichtung (64, 67, 72, 74) berührungslos erfasst wird, **dadurch gekennzeichnet, dass** mittels der Sensoreinrichtung (64, 67, 72, 74) Lücken der Fahrzeugkontur in Abhängigkeit vom Abstand zum vorderen Ende des Fahrzeuges erfasst werden.

2. Verfahren nach Anspruch 1, **dadurch gekennzeichnet, dass** Personenkraftwagen (82), Kleintransporter (87) und Lastkraftwagen (89) unterschiedlichen Fahrzeugklassen zugeordnet werden.

3. Verfahren nach Anspruch 2, **dadurch gekennzeichnet, dass** mindestens ein Waschwerkzeug als Waschbürste (34, 46, 48) ausgestaltet ist, deren gegen das Fahrzeug ausgeübter Anpressdruck selbsttätig an die dem Fahrzeug zugeordnete Fahrzeugklasse angepasst wird.

4. Verfahren nach einem der voranstehenden Ansprüche, **dadurch gekennzeichnet, dass** Lastkraftwagen (89) ohne Anhänger und Lastkraftwagen (99) mit Anhänger (100) unterschiedlichen Fahrzeugklassen zugeordnet werden.

5. Verfahren nach Anspruch 4, **dadurch gekennzeichnet, dass** mindestens ein Waschwerkzeug (34) höhenverstellbar gelagert ist und im Bereich zwischen dem Lastkraftwagen (99) und dem Anhänger (100) allenfalls bis zu einer vorgegebenen oder vorgebbaren Mindesthöhe abgesenkt wird.

6. Verfahren nach Anspruch 4, **dadurch gekennzeichnet, dass** mindestens ein Waschwerkzeug (46, 48) quer zur Längsrichtung des Fahrzeuges horizontal verstellbar ist und in den Bereich zwischen dem Lastkraftwagen (99) und dem Anhänger (100) allenfalls bis zu einer vorgegebenen oder vorgebbaren maximalen Eintauchtiefe eintaucht.

7. Verfahren nach einem der voranstehenden Ansprüche, **dadurch gekennzeichnet, dass** Sattelzugmaschinen (96) mit und ohne Sattelauflieger (97) unterschiedlichen Fahrzeugklassen zugeordnet werden.

8. Verfahren nach Anspruch 7, **dadurch gekennzeichnet, dass** mindestens ein Waschwerkzeug (34) höhenverstellbar gelagert ist und in den Bereich zwischen Sattelzugmaschine (96) und Sattelauflieger (97) nicht eintaucht.

9. Verfahren nach einem der voranstehenden Ansprüche, **dadurch gekennzeichnet, dass** die Sensoreinrichtung (64, 67, 72, 74) geometrische Fahrzeugeigenarten erfasst.

10. Verfahren nach einem der voranstehenden Ansprüche, **dadurch gekennzeichnet, dass** mittels der Sensoreinrichtung (64, 67, 72, 74) geprüft wird, ob das Fahrzeug in mindestens einem vorgegebenen Abstand (X1, X2) zum vorderen Ende des Fahrzeuges eine vorgegebene Höhe (H1, H2) überschreitet.

11. Verfahren nach einem der voranstehenden Ansprüche, **dadurch gekennzeichnet, dass** aufgrund der Lage der erfassten Lücken relativ zum vorderen Ende des Fahrzeuges zwischen Lastkraftwagen (99) mit Anhängern (100) und Sattelzügen (95) unterschieden wird.

12. Verfahren nach einem der voranstehenden Ansprüche, **dadurch gekennzeichnet, dass** die erfassten Fahrzeugeigenarten und/oder die dem Fahrzeug zugeordnete Fahrzeugklasse zur Bestimmung der Kosten der Fahrzeugwäsche herangezogen werden.

13. Fahrzeugwaschanlage (10) zum Waschen eines Fahrzeuges (82, 87, 89, 91, 95, 99), insbesondere zur Durchführung des Verfahrens nach einem der voranstehenden Ansprüche, mit mindestens einem relativ zu einem zu waschenden Fahrzeug motorisch bewegbaren Waschwerkzeug (34, 46, 48), dessen Betrieb von einer Steuereinrichtung (54) steuerbar ist, wobei die Fahrzeugwaschanlage (10) eine Fahrzeugeigenarten erfassende Sensoreinrichtung (64, 67, 72, 74) umfasst, wobei das zu waschende Fahrzeug mittels der Fahrzeugeigenarten einer von mehreren vorgegebenen Fahrzeugklassen zuordnenbar und der Betrieb des mindestens einen Waschwerkzeuges (34, 46, 48) selbsttätig an die dem Fahrzeug zugeordnete Fahrzeugklasse anpassbar ist, und wobei mindestens ein Waschwerkzeug (34, 46, 48) selbsttätig in Abhängigkeit von der Kontur des Fahrzeuges relativ zum Fahrzeug bewegbar ist, wobei dem Waschwerkzeug (34, 46, 48) zur Erfassung der Kontur des Fahrzeuges mindestens ein erstes Sensorglied (61, 62) zugeordnet ist, **dadurch gekennzeichnet, dass** die Sensoreinrichtung zur Erfassung von Fahrzeugeigenarten mindestens ein zweites Sensorglied (64, 67, 72, 74) aufweist und dass die Fahrzeugwaschanlage (10) ein relativ zum Fahrzeug verfahrbares Portal (13) aufweist, an dem das mindestens eine Waschwerkzeug (34, 46, 48) verstellbar gelagert ist und an dem zumindest ein zweites Sensorglied (72, 74) gehalten ist, wobei das zweite Sensorglied (72, 74) in Fahrtrichtung (70), die das Portal (13) zu Beginn des Waschvorgangs einnimmt, vor dem mindestens einen Waschwerkzeug (34, 46, 48) angeordnet ist, und dass mittels der Sensoreinrichtung Lücken (L, D) in der Kontur des Fahrzeuges in Abhängigkeit vom Abstand zum vorderen Ende des Fahrzeuges erfassbar sind.

14. Fahrzeugwaschanlage nach Anspruch 13, **dadurch gekennzeichnet, dass** die Sensoreinrichtung (64, 67, 72, 74) das Überschreiten einer vorbestimmten Höhe eines höhenverstellbaren, selbsttätig der Kontur des Fahrzeugs folgenden Waschwerkzeugs (34) in mindestens einem vorgegebenen Abstand (X1, X2) zum vorderen Ende des Fahrzeuges erfasst.

15. Fahrzeugwaschanlage nach Anspruch 13 oder 14, **dadurch gekennzeichnet, dass** mindestens ein Waschwerkzeug als Waschbürste (34, 46, 48) ausgestaltet ist, deren gegen das Fahrzeug ausgeübter Anpressdruck in Abhängigkeit von der dem Fahrzeug zugeordneten Fahrzeugklasse einstellbar ist.

16. Fahrzeugwaschanlage nach einem der Ansprüche 13 bis 15, **dadurch gekennzeichnet, dass** mindestens ein Waschwerkzeug (34) höhenverstellbar gelagert ist und in eine Lücke (L, D) der Fahrzeugkontur allenfalls bis zu einer vorgegebenen oder vorgebbaren Mindesthöhe absenkbar ist.

17. Fahrzeugwaschanlage nach Anspruch 16, **dadurch gekennzeichnet, dass** mindestens ein Waschwerkzeug (46, 48) quer zur Fahrzeuglängsachse in horizontaler Richtung verstellbar ist und in eine Lücke (D) der Fahrzeugkontur allenfalls bis zu einer vorgegebenen oder vorgebbaren maximalen Eintauchtiefe einfahrbar ist.

18. Fahrzeugwaschanlage nach einem der Ansprüche 13 bis 17, **dadurch gekennzeichnet, dass** die Fahrzeugwaschanlage ein Betriebsdatenerfassungsglied (56) aufweist, dem die erfassten Fahrzeugeigenarten und/oder die dem Fahrzeug zugeordnete Fahrzeugklasse bereitstellbar sind.

## Claims

1. Method for automatically washing a vehicle (82, 87, 89, 91, 95, 99) in a vehicle washing installation (10), wherein the vehicle is automatically washed by means of at least one washing tool (34, 46, 48), which is movable by a motor relative to the vehicle, and the operation of which is controlled by a control device (54), wherein vehicle characteristics are determined by means of a sensor device (64, 67, 72, 74) of the vehicle washing installation (10), and the vehicle (82, 87, 89, 91, 95, 99) to be washed is automatically allocated to one of several predefined vehicle categories on the basis of the vehicle characteristics determined, and the operation of the at least one washing tool (34, 46, 48) is automatically adapted to the vehicle category allocated to the vehicle, and wherein at least one vehicle characteristic is determined in a noncontacting manner by means of the sensor device (64, 67, 72, 74), **characterized in that** gaps in the vehicle contour are determined in dependence upon the spacing from the front end of the vehicle by means of the sensor device (64, 67, 72, 74).

2. Method in accordance with claim 1, **characterized in that** passenger cars (82), vans (87) and lorries (89) are allocated to different vehicle categories.

3. Method in accordance with claim 2, **characterized in that** at least one washing tool is configured as a washing brush (34, 46, 48), and the contact pressure of the washing brush, which is exerted against the vehicle, is automatically adapted to the vehicle category allocated to the vehicle.

4. Method in accordance with any one of the preceding claims, **characterized in that** lorries (89) without trailer and lorries (99) with trailer (100) are allocated to different vehicle categories.

5. Method in accordance with claim 4, **characterized in that** at least one washing tool (34) is mounted so as to be adjustable in height and is lowered at the most to a predefined or predefinable minimum height in the area between the lorry (99) and the trailer (100).

6. Method in accordance with claim 4, **characterized in that** at least one washing tool (46, 48) is horizontally adjustable transversely to the longitudinal direction of the vehicle and penetrates into the area between the lorry (99) and the trailer (100) at the most to a predefined or predefinable maximum penetration depth.

7. Method in accordance with any one of the preceding claims, **characterized in that** semi-trailer tractors (96) with and without semi-trailer (97) are allocated to different vehicle categories.

8. Method in accordance with claim 7, **characterized in that** at least one washing tool (34) is mounted so as to be adjustable in height and does not penetrate into the area between semi-trailer tractor (96) and semi-trailer (97).

9. Method in accordance with any one of the preceding claims, **characterized in that** the sensor device (64, 67, 72, 74) determines geometric vehicle characteristics.

10. Method in accordance with any one of the preceding claims, **characterized in that** a check is made by means of the sensor device (64, 67, 72, 74) as to whether the vehicle exceeds a predefined height (H1, H2) at at least one predefined spacing (X1, X2) from the front end of the vehicle.

11. Method in accordance with any one of the preceding claims, **characterized in that** a distinction is made between lorries (99) with trailers (100) and semi-trailer trucks (95) on the basis of the location of the gaps determined relative to the front end of the vehicle.

12. Method in accordance with any one of the preceding claims, **characterized in that** the vehicle characteristics determined and/or the vehicle category allocated to the vehicle are used to determine the costs of washing the vehicle.

13. Vehicle washing installation (10) for washing a vehicle (82, 87, 89, 91, 95, 99), in particular, for carrying out the method in accordance with any one of the preceding claims, having at least one washing tool (34, 46, 48) which is movable by a motor relative to a vehicle to be washed, and the operation of which is controllable by a control device (54), the vehicle washing installation (10) comprising a sensor device (64, 67, 72, 74) determining vehicle characteristics, the vehicle to be washed being allocatable by way of the vehicle characteristics to one of several predefined vehicle categories, and the operation of the at least one washing tool (34, 46, 48) being automatically adaptable to the vehicle category allocated to the vehicle, and at least one washing tool (34, 46, 48) being automatically movable in dependence upon the contour of the vehicle relative to the vehicle, at least one first sensor member (61, 62) being associated with the washing tool (34, 46, 48) for determining the contour of the vehicle, **characterized in that** the sensor device comprises at least one second sensor member (64, 67, 72, 74) for determining vehicle characteristics, and **in that** the vehicle washing installation (10) comprises a gantry (13) which is movable relative to the vehicle, and on which the at least one washing tool (34, 46, 48) is adjustably mounted, and on which at least a second sensor member (72, 74) is held, the second sensor member (72, 74) being arranged, in the direction of motion (70) which the gantry (13) adopts at the beginning of the washing operation, in front of the at least one washing tool (34, 46, 48), and **in that** gaps (L, D) in the contour of the vehicle are determinable in dependence upon the spacing from the front end of the vehicle by means of the sensor device.

14. Vehicle washing installation in accordance with claim 13, **characterized in that** the sensor device (64, 67, 72, 74) detects when a predetermined height of a height-adjustable washing tool (34) automatically following the contour of the vehicle, at at least one predefined spacing (X1, X2) from the front end of the vehicle, is exceeded.

15. Vehicle washing installation in accordance with claim 13 or 14, **characterized in that** at least one washing tool is configured as a washing brush (34, 46, 48), and the contact pressure of the washing brush, which is exerted against the vehicle, is settable in dependence upon the vehicle category allocated to the vehicle.

16. Vehicle washing installation in accordance with any one of claims 13 to 15, **characterized in that** at least one washing tool (34) is mounted so as to be adjustable in height and is lowerable into a gap (L, D) in the vehicle contour at the most to a predefined or predefinable minimum height.

17. Vehicle washing installation in accordance with claim 16, **characterized in that** at least one washing tool (46, 48) is adjustable in the horizontal direction transversely to the longitudinal axis of the vehicle and is insertable into a gap (D) in the vehicle contour at the most to a predefined or predefinable maximum insertion depth.

18. Vehicle washing installation in accordance with any one of claims 13 to 17, **characterized in that** the vehicle washing installation comprises an operating data recording member (56) to which the determined vehicle characteristics and/or the vehicle category allocated to the vehicle can be made available.

## Revendications

1. Procédé de lavage automatique d'un véhicule (82, 87, 89, 91, 95, 99) dans une installation de lavage de véhicule (10), selon lequel le véhicule est lavé automatiquement à l'aide d'au moins un outil de lavage (34, 46, 48) mobile de façon motorisée par rapport au véhicule, outil dont le fonctionnement est commandé par un dispositif de commande (54), la particularité du véhicule étant détectée au moyen d'un dispositif de détection (64, 67, 72, 74) de l'installation de lavage de véhicule (10) et le véhicule (82, 87, 89, 91, 95, 99) à laver étant associé automatiquement, une fois sa particularité détectée, à une catégorie de véhicule parmi plusieurs catégories de véhicule prédéfinies, et le fonctionnement du ou des outils de lavage (34, 46, 48) étant adapté automatiquement à la catégorie de véhicule associée au véhicule, et au moins une particularité du véhicule étant détectée sans contact au moyen du dispositif de détection (64, 67, 72, 74),
**caractérisé en ce que** les espaces vides du contour du véhicule sont détectés au moyen du dispositif de détection (64, 67, 72, 74) en fonction de la distance avec l'extrémité avant du véhicule.

2. Procédé selon la revendication 1, **caractérisé en ce que** les voitures, les camionnettes (87) et les poids lourds (89) sont associés à différentes catégories de véhicule.

3. Procédé selon la revendication 2, **caractérisé en ce qu'**au moins un outil de lavage est réalisé sous la forme d'une brosse de lavage (34, 46, 48), dont la pression d'application exercée contre le véhicule est adaptée automatiquement à la catégorie de véhicule associée au véhicule.

4. Procédé selon l'une quelconque des revendications précédentes, **caractérisé en ce que** les poids lourds (89) sans remorque et les poids lourds (99) avec remorque (100) sont associés à différentes catégories de véhicule.

5. Procédé selon la revendication 4, **caractérisé en ce qu'**au moins un outil de lavage (34) est monté réglable en hauteur et est abaissé au maximum jusqu'à une hauteur minimale prédéfinie ou pouvant être prédéfinie dans la zone située entre le poids lourds (99) et la remorque (100).

6. Procédé selon la revendication 4, **caractérisé en ce qu'**au moins un outil de lavage (46, 48) est mobile horizontalement transversalement à la direction longitudinale du véhicule et s'enfonce dans la zone située entre le poids lourd (99) et la remorque (100) au maximum jusqu'à une profondeur d'enfoncement prédéfinie ou pouvant être prédéfinie.

7. Procédé selon l'une quelconque des revendications précédentes, **caractérisé en ce que** des tracteurs de semi-remorques (96) avec et sans semi-remorque (97) sont associés à différentes catégories de véhicule.

8. Procédé selon la revendication 7, **caractérisé en ce qu'**au moins un outil de lavage (34) est monté réglable en hauteur et ne s'enfonce pas dans la zone située entre le tracteur de semi-remorque (96) et la semi-remorque (97).

9. Procédé selon l'une quelconque des revendications précédentes, **caractérisé en ce que** le dispositif de détection (64, 67, 72, 74) détecte les particularités géométriques du véhicule.

10. Procédé selon l'une quelconque des revendications précédentes, **caractérisé en ce qu'**on contrôle, au moyen du dispositif de détection (64, 67, 72, 74), si le véhicule, dans au moins un écart prédéfini (X1, X2) par rapport à l'extrémité avant du véhicule, dépasse une hauteur prédéfinie (H1, H2).

11. Procédé selon l'une quelconque des revendications précédentes, **caractérisé en ce que** la position des espaces vides détectés par rapport à l'extrémité avant du véhicule permet de faire la distinction entre les poids lourds (99) avec remorques (100) et avec semi-remorques (95).

12. Procédé selon l'une quelconque des revendications précédentes, **caractérisé en ce que** les particularités détectées du véhicule et/ou la catégorie de véhicule associée au véhicule sont utilisées pour déterminer les frais de lavage du véhicule.

13. Installation de lavage de véhicule (10) permettant de laver un véhicule (82, 87, 89, 91, 95, 99), en particulier de mettre en oeuvre le procédé selon l'une quelconque des revendications précédentes, comprenant au moins un outil de lavage (34, 46, 48) mobile de façon motorisée par rapport à un véhicule à laver, outil dont le fonctionnement peut être commandé par un dispositif de commande (54), l'installation de lavage de véhicule (10) comprenant un dispositif de détection (64, 67, 72, 74) détectant les particularités du véhicule, le véhicule à laver pouvant être associé, au moyen des particularités du véhicule, à une catégorie de véhicule parmi plusieurs catégories de véhicule prédéfinies, et le fonctionnement du ou des outils de lavage (34, 46, 48) pouvant être adapté automatiquement à la catégorie de véhicule associée au véhicule, et au moins un outil de lavage (34, 46, 48) pouvant se déplacer automatiquement par rapport au véhicule en fonction du contour du véhicule, au moins un premier organe de détection (61, 62) étant associé à l'outil de lavage (34, 46, 48) pour détecter le contour du véhicule, **caractérisé en ce que** le dispositif de détection permettant de détecter des catégories de véhicule comprend au moins un second organe de détection (64, 67, 72, 74) et **en ce que** l'installation de lavage de véhicule (10) comprend un portique (13) mobile par rapport au véhicule, sur lequel le ou les outils de lavage (34, 46, 48) sont montés réglables et retenus sur le ou les seconds organes de détection (72, 74), le second organe de détection (72, 74) étant disposé dans le sens de marche (70) que le portique (13) occupe au début de l'opération de lavage devant le ou les outils de lavage (34, 46, 48), et **en ce que** des espaces vides (L, D) dans le contour du véhicule peuvent être détectés en fonction de la distance par rapport à l'extrémité avant du véhicule au moyen du dispositif de détection.

14. Installation de lavage de véhicule selon la revendication 13, **caractérisée en ce que** le dispositif de détection (64, 67, 72, 74) détecte le dépassement d'une hauteur prédéfinie d'un outil de lavage (34) réglable en hauteur, suivant automatiquement le contour du véhicule, dans au moins une distance prédéfinie (X1, X2) par rapport à l'extrémité avant du véhicule.

15. Installation de lavage de véhicule selon la revendication 13 ou 14, **caractérisée en ce qu'**au moins un outil de lavage est réalisé sous la forme d'une brosse de lavage (34, 46, 48) dont la pression d'application exercée contre le véhicule peut être réglée en fonction de la catégorie de véhicule associée au véhicule.

16. Installation de lavage de véhicule selon l'une quelconque des revendications 13 à 15, **caractérisée en ce qu'**au moins un outil de lavage (34) est monté réglable en hauteur et peut être abaissé dans un espace vide (L, D) du contour du véhicule au maximum jusqu'à une hauteur minimale prédéfinie ou pouvant être prédéfinie.

17. Installation de lavage de véhicule selon la revendication 16, **caractérisée en ce qu'**au moins un outil de lavage (46, 48) est mobile dans la direction horizontale transversalement à l'axe longitudinal du véhicule et peut être introduit dans un espace vide (D) du contour du véhicule au maximum jusqu'à une profondeur d'enfoncement maximale prédéfinie ou pouvant être prédéfinie.

18. Installation de lavage de véhicule selon l'une quelconque des revendications 13 à 17, **caractérisée en ce que** l'installation de lavage de véhicule comprend un organe de détection de données de fonctionnement (56) auquel les particularités détectées du véhicule et/ou la catégorie de véhicule associée au véhicule peuvent être fournies.
